# EUROPEAN PATENT SPECIFICATION

(11) **EP 0 290 601 B1**
(45) Date of publication and mention of the grant of the patent: **02.10.1996**
(21) Application number: 88900905.6
(22) Date of filing: 27.11.1987
(51) Int. Cl.: B29D 30/00, G01M 17/02

(54) **COMBINATION GRINDER/BALANCER**
KOMBINIERTE SCHLEIF- UND BALANCIERMASCHINE
MEULEUSE/EQUILIBREUSE COMBINEES

(30) Priority: 27.11.1986 NL 8603022
(43) Date of publication of application: 17.11.1988
(73) Proprietor: NEWTON, Robert Park III, Tampa, FL 33624 (US); BOELE, Herik Arie, NL-Dussen (NL)
(72) Inventor: NEWTON, Robert Park III, Tampa, FL 33624 (US); BOELE, Herik Arie, NL-Dussen (NL)
(74) Representative: Hepworth, John Malcolm
(86) International application number: US8703141
(87) International publication number: WO8803866

(56) References cited:
- US-A- 3 911 751
- US-A- 4 016 020
- US-A- 4 139 041
- US-A- 4 366 707

## Description

### BACKGROUND OF THE INVENTION

This invention relates generally to the correction of vehicular tires to reduce undue vibration in the tire rotating on a vehicle and more particularly to a machine which combines force variation tire grinding with dynamic balancing in a single machine.

Because vehicular tires support the sprung mass of a vehicle on a road surface and such tires are resilient, any irregularities in the dimensions of the tire itself or in its resiliency, and dimensional irregularities in the wheel rim and/or any dynamic imbalance of the tire and wheel rim assembly will cause undue vibrations to be transmitted to the sprung mass of the vehicle, thereby producing undesirable ride characteristics commonly known as "smooth road shake." Dimensional and resilient irregularities have been reduced using a technique known as "force variation tire grinding" while weight imbalance was typically reduced using a technique known as "dynamic balancing." Heretofore, one machine was required to force variation grind the tire while another machine was used to dynamically balance the tire and wheel assembly. A good description of such an arrangement is illustrated in US Patent No. 4,139,041.

The main problem with this arrangement is that it was necessary to transfer the wheel and tire assembly between the force variation grinding machine and the tire balancer in order to complete the overall correction operation. This was, reletively speaking, time-consuming and also physically demanding on the operator. Therefore, there existed the need for a single machine which could both force variation tire grind and dynamic balance.

### SUMMARY OF THE INVENTION

These and other problems and disadvantages associated with the prior art are overcome by the invention disclosed herein by providing a tire correction machine and a method which is capable of both force variation tire grinding and dynamic balancing while the tire and wheel assembly remains mounted on a common shaft without detrimentally affecting either operation. As a result, the minimum number of components are required to complete both of these tire correction operations and the machine is considerably simpler than the two machines required by the prior art.

A method of correcting variations in radial forces exerted on a wheel and tire assembly while under radial loading through the tire tread and dynamic imbalance in a tire and wheel assembly comprising the steps of mounting the tire and wheel assembly on a support shaft so that the tire and wheel assembly is rotatable about its rotational axis on the vehicle; connecting the support shaft supporting the wheel and tire assembly to a drive motor through drive belts where the motor is oriented generally parallel to the support shaft and spaced from the support shaft along a first path extending radially of the support shaft so that the belt tension exerts a generally radially extending force on the support shaft along the first path; rotating the tire and wheel assembly about its rotational axis on said support shaft with the motor at a rotational speed of about 12-15 rpm while exerting a radially directed load on the wheel and tire assembly with a drum through the peripheral tread on the tire, which load corresponds to the load to which the tire and wheel assembly is subjected during use on the vehicle and is generally parallel to the first path; while the tire and wheel assembly is radially loaded, measuring the variations in force exerted by the tire tread on the loading drum known as radial runout; removing any portions of the tire tread required to reduce the force variations exerted by the tire tread on the loading drum until the force variations are reduced to a prescribed range; after reducing the force variations exerted by the tire tread to said prescribed level, removing the radially directed load from the tire tread and disengaging the loading drum from contact with the tire tread but leaving the tire and wheel assembly still rotatably mounted about the same rotational axis as when said tire and wheel assembly is rotating under load; rotating the unloaded tire and wheel assembly about its rotational axis on said support shaft at a rotational speed of about 500-1500 rpm; and measuring the dynamic unbalance forces exerted on the support shaft along paths generally normal to the first path so that the radial forces exerted on the support shaft by the belts are not measured as dynamic unbalance forces and locating the dynamic imbalance in the tire and wheel assembly without removing the tire and wheel assembly from the support shaft.

The method can also include rotating the tire and wheel assembly sufficiently slowly during the loaded radial runout reading and correction to effectively eliminate the effect of dynamic imbalance in the tire and wheel assembly. The method can also include isolating the measurement of a second set of radially directed forces imposed on a rotatable shaft where a first set of radially direct forces imposed on the shaft do not rotate about the shaft axis while the second set of radially directed forces rotate about the shaft axis. This method may include operatively associating a first transducer means with the shaft to detect the magnitude of the first force loading on the shaft, operatively associating a second transducer means with the shaft so that the first set of forces is not imposed thereon while the magnitude of the second set of forces is detected as the second set of forces rotates thereby. The invention also includes the apparatus for carrying out the methods.

These and other features and advantages of the invention will become more apparent upon consideration of the following detailed description and accompanying drawings where in like characters of reference designate corresponding parts through the several views and in which:

### BRIEF DESCRIPTION OF THE DRAWINGS

Fig. 1 is a front view of the apparatus embodying the invention;
Fig. 2 is a left end view thereof;

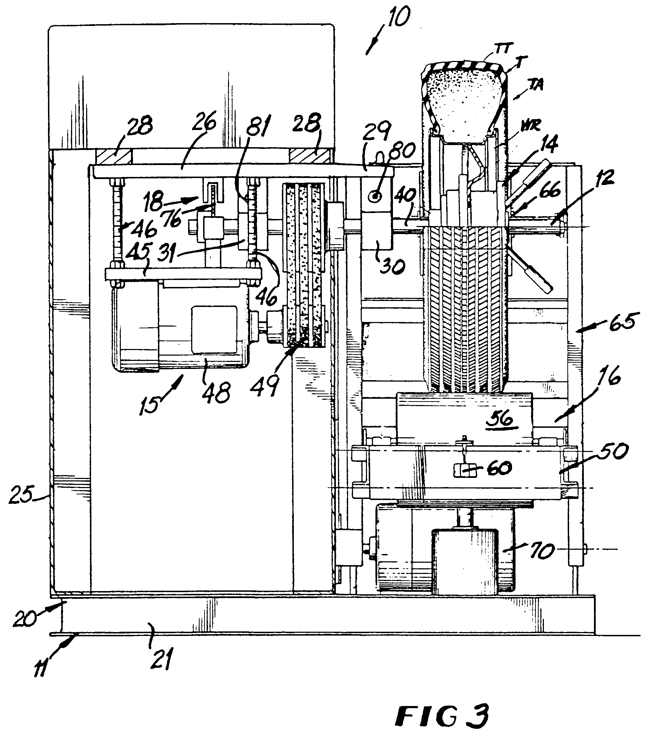

Fig. 3 is an enlarged end view with the covers removed;

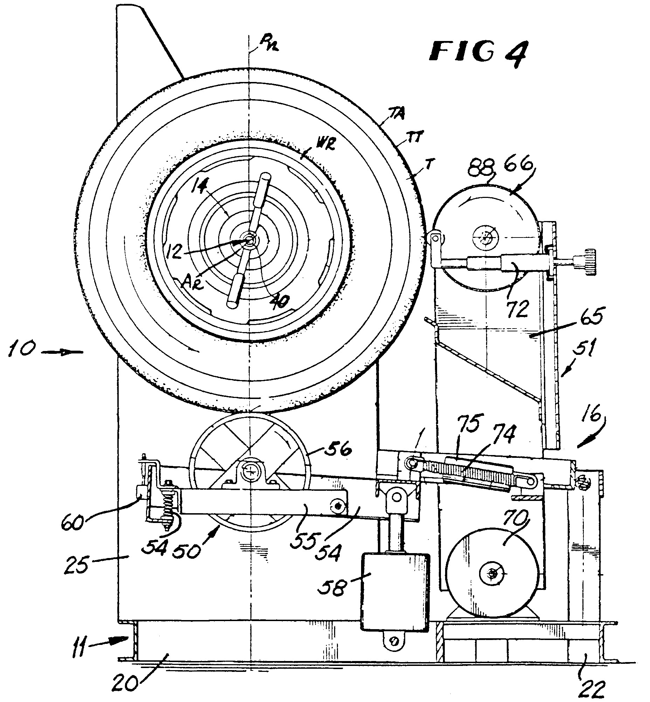

Fig. 4 is an enlarged cross-sectional view taken generally along line 4-4 in Fig. 1;

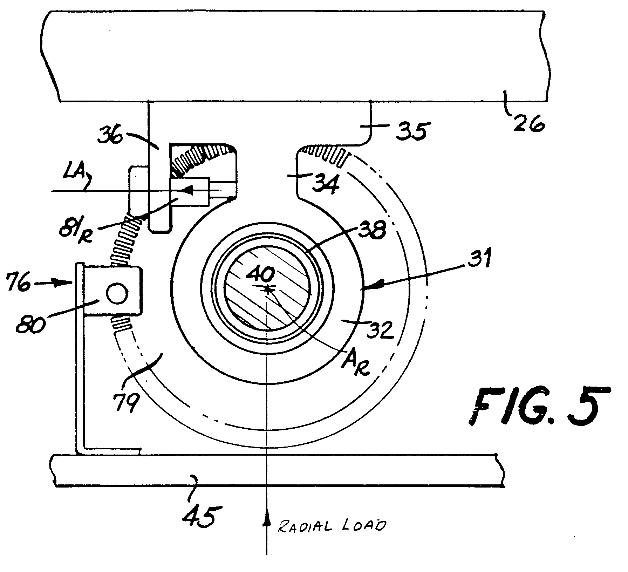

Fig. 5 is an enlarged cross-sectional view taken generally along line 5-5 in Fig. 1;
Fig. 6 is a schematic illustrating the control circuit used in the invention.

These features and the following detailed description disclose specific embodiments of the invention, however, it is to be understood that the inventive concept is not limited thereto since it may be embodied in other forms.

### DETAILED DESCRIPTION OF ILLUSTRATIVE EMBODIMENTS

The apparatus embodying the invention was designed to test and correct "smooth road shake" problems associated with a tire and wheel assembly TA, that is, an inflated pneumatic vehicular tire T mounted on a vehicular wheel rim WE. The pneumatic tire T has a peripheral road engaging tread TT thereon while the wheel rim WR has a central disc CD that defines both lug holes therein and a central axle opening therethrough so that the wheel lugs on the vehilce can mount the tire and wheel assembly TA on that vehicle.

The tire correction machine 10 embodying the invention includes a frame assembly 11 which mounts thereon a spindle assembly 12 on which the tire and wheel assembly TA is mounted with a mounting assembly 14 so that the effective rotational axis AR of the tire and wheel assembly on the vehicle coincides with the rotational axis of the spindle assembly 12. The machine 10 also includes a drive assembly 15 for driving the spindle assembly 12 in both it force variation grinding mode and dynamic balance mode. The correction machine 10 also includes a force variation grinding subsystem 16 which serves to correct loaded radial runout in the tire and wheel assembly and a dynamic balancer subsystem 18 which serves to detect and locate dynamic imbalance in the tire and wheel assembly so that it can be corrected.

In operation, the tire and wheel assembly TA is mounted on the spindle assembly 12 using mounting assembly 14. A control system 19 is then activated which causes the force variation grinding subsystem 16 to be first activated as well as the drive assembly 15 to rotate the spindle assembly 12 at the appropriate low speed for force variation grinding. After the force variation grinding subsystem 16 has completed the force variation grinding mode, the control system 19 activates the dynamic balance subsystem 18 while deactivating the force variation grinding subsystem 16. This causes the drive assembly 15 to rotate the spindle assembly 12 at a higher rotational speed sufficient for dynamic balancing. The dynamic balance subsystem 18 then determines the amount of imbalance and the location thereof so that weights can be added to the vehicular wheel rim WR after the dynamic balancing mode is completed. When the dynamic balancing mode is completed, the control system stops the drive assembly 15 while leaving the dynamic balancing system 18 connected to the spindle assembly 12 so that the tire assembly TZ can be rotated to the proper location for mounting the weights on the wheel rim WR.

### Frame

The frame assembly 11 includes an L-shaped base 20 which sits on the floor to support the machine. The base 20 has a first leg 21 and a second leg 22 connected to leg 21, both of which have an open rectilinear configuration. The force variation subsystem 16 is mounted on the first leg 21 of the base 20. The spindle assembly 12, the drive assembly 15 and the dynamic balance subsystem 18 are mounted on the second leg 22 of the base 20. This locates the force variation subsystem 16 in operative association with the tire and wheel assembly TA on spindle assembly 12. As will become more apparent, the central axis of the leg 21 is normal to that of leg 22.

### Spindle Assembly

The spindle assembly 12 is mounted on the second leg 22 of the base 20 and projects upwardly therefrom. The spindle assembly 12 includes an upright box beam 25 whose lower end is mounted on the leg 22 with appropriate access opening on opposite sides thereof. A cast support base 26 is mounted in the uppper end of the box beam 25 on cross supports 28. The support base 26 defines a forwardly projecting bearing support 29 on the front end thereof which projects forwardly of the box beam 25 as will become more apparent.

A pair of balancer type bearing blocks 30 and 31 are mounted on the bottom of the support base 26 and depend therebelow. The front bearing block 30 is mounted on the bearing support 29 while the rear bearing block 31 is mounted a prescribed distance rearwardly of the bearing block 30 so that the bearing blocks align along a common axis A_{R} which will be the rotational axis of the tire and wheel assembly TA when mounted on the machine. The bearing blocks 30 and 31 each have an enlarged hub 32 at the lower end thereof which receives the shaft bearing 38 therein. A reduced cross-sectional area connector 34 connects the hub 32 with the base flange 35 attached to the support base 26. One of the projecting ends of the base flange 35 on each of the bearing blocks 30 and 31 defines a depending support flange 36 spaced from connector 34 a prescribed distance. Each of the support flanges 36 is designed to accept a piezoelectric transducer as will become more apparent. Each of the bearings blocks 30 and 31 mounts the shaft bearing 38 therein with the inner races of the bearings mounting a drive spindle 40 therein which extends through both of the bearing blocks 30 and 31 as rotatable about the axis A_{R} . The working end of the drive spindle 40 projects out over the second leg 22 of the base 20 to mount the tire and wheel assembly TA as will become more apparent.

The working end of the spindle 40 mounts the mounting assembly 14 thereon in a manner described in earlier Patent No. 4,139,041. Thus, it will be seen that any type tire and wheel assembly can be mounted using the mounting assembly 14 so that the tire and wheel assembly TA rotates about its rotational axis A_{R} coinciding with the axis A_{R} of the spindle 40.

### DRIVE ASSEMBLY

The drive assembly 15 is connected to the spindle 40 between the bearing blocks 30 and 31 and drives the spindle 40 during both the force variation grinding mode and the dynamic balancing mode. The spindle 40 is typically rotated at about 12-15 RPM during the grinding mode and about 500-1500 RPM during the balancing mode.

The drive assembly 15 includes a motor support 45 mounted on the support base 26 by spaces 46 so that the support 45 is located directly below the spindle 40. The support 45 mounts drive motor 48 so that its output shaft is located parallel to and in vertical alignment with the spindle 40. A belt and pulley arrangement 49 drivingly connects the motor 48 to a spindle 40 to drive same. The motor 48 is a variable speed motor of known construction so that both the lower rotational speed for grinding and higher rotational speed for balancing can be achieved. The motor 48 will act as a brake when the polarity is reversed.

It will also be appreciated that separate motors may be used to drive the spindle 40 during the grinding and balancing modes. Such an arrangement is illustrated in Dutch Application No. 8603022, filed November 27, 1986 (NL-A-86 03 022 published 16,6,88 representing the claimed priority). When the two separate motors are used, it is necessary to isolate the motor not used in balancing while balancing is taking place.

### FORCE VARIATION GRINDING SUBSYSTEM

The force variation grinding subsystem 16 is similar to that of U.S. Patent No. 4,139,041. Subsystem 16 includes a loading unit 50 and a grinding unit 57. The loading unit 50 serves to radially load the tire and wheel assembly TA to determine the reactive force variations circumferentially about the tire. The grinding unit 51 serves to grind away small portions of the tread at the shoulders to reduce the loaded radial runout of the tire and wheel assembly TA.

The loading unit 50 includes a loading arm assembly 54 pivoted on the leg 22 of base 20 about an axis parallel to the spindle axis A_{R}. The arm assembly 54 pivotally mounts a yoke assembly 55 therein also about an axis parallel to spindle axis A_{R}. The yoke assembly 55 rotatably mounts a loading drum 56 thereon so that drum 56 rotates about an axis parallel to spindle axis A_{R} which is also about vertically aligned with the spindle 40 to press against the tire tread TT to radially load the tire and wheel assembly TA.

The loading arm assembly 54 is positioned by load cylinder 58 which presses the drum 56 against the tire as its piston is extended. Typically, an incompressible fluid is used in cylinder 58 so that the position of arm assembly 54 is fixed after the assembly TA is loaded.

The load on the tire tread is maintained by a spring assembly 59 between the arm assembly 54 and the yoke assembly 55. A transducer 60 measures the relative positions between the arm assembly 54 and the yoke assembly 55 which is a function of the variation in the loaded radial runout of the tire and wheel assembly TA. Thus transducer 60 detects the amount of loaded radial runout.

The grinding unit 51 includes a buffer arm assembly 65 also pivoted on the leg 22 of base 20 so that its axis of rotation is parallel to spindle 40. The upper end of arm assembly 65 mounts a buffing head 66 about horizontally level with spindle 40. The buffing head 66 has a pair of tapered rasps 68 on shaft 69. The shaft 69 is driven by a motor 70 through a belt drive. The rasps 68 are held adjacent the tire tread TT by a spring loaded positioner 72.

The buffer arm assembly 65 is connected to the loading arm assembly 54 by preload springs 74 that maintain the positioner 72 in contact with the tire thread TT. A buffing cylinder 75 also connects the arm assemblies 54 and 65 to move the rasps 68 against the tread TT during grinding.

### DYNAMIC BALANCE SUBSYSTEM

The dynamic balance subsystem 18 includes a shaft encoder assembly 76 to measure the rotation angle of spindle 40 and a force transducer assembly 78 to measure the dynamic loading on the tire and wheel assembly TA.

The shaft encoder assembly 76 is of typical construction with an apertured encoder disc 79 fixed to the rear end of spindle 40 and rotatable therewith. Appropriate photoelectric pickups 80 are provided at the edge of disc 79 to read the angular position of the spindle 40 for the measured dynamic loading to be related to the angular position around the tire and wheel assembly TA.

The force transducer assembly 78 includes a pair of piezoelectric transducers 81, one being mounted on the support flange 36 of each bearing 30 and 31. The operating end of the transducer 81 bears against that portion of bearing 30 or 31 subject to movement due to dynamic imbalance in the tire and wheel assembly TA. The line of action LA of the transducers 81 is generally normal to the load imposed on the spindle 40 by the loading unit 50 and by the belt tension to the motor 48. This isolates the transducers 81 from these forces so that only dynamic unbalance is detected.

It will be understood that different types of transducers which can withstand higher loads may be substituted for transducers 81. This would allow the radial loading and belt loading to be aligned with the line of action of the transducers, however, appropriate circuity would be used to correct the transducer readouts for the extraneous loads.

### COVER ASSEMBLIES

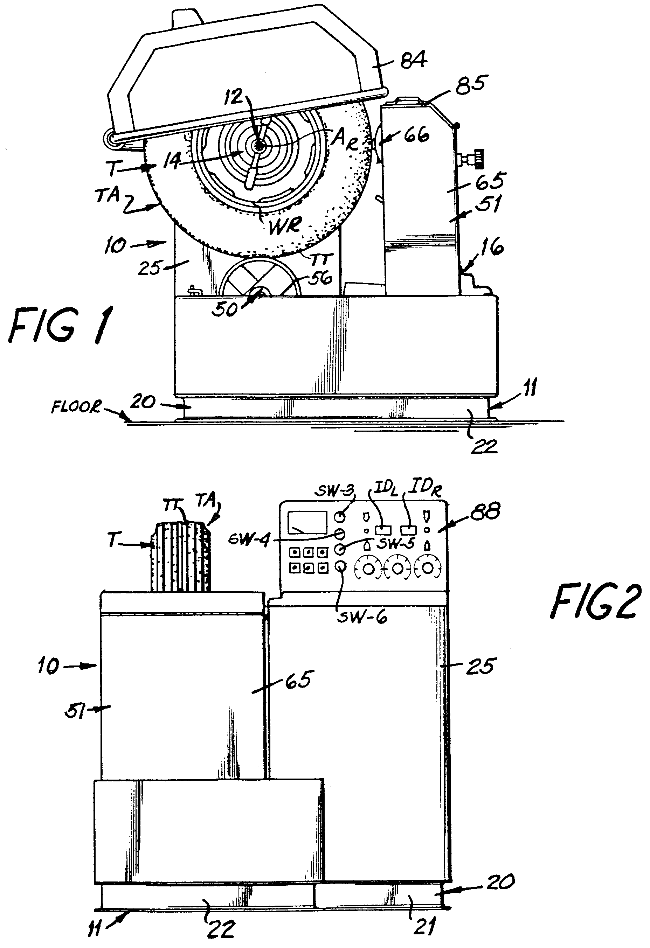

To protect the operator, a tire cover assembly 84 is provided which must be lowered over the tire assembly TA as seen in Fig. 1 at least when the machine is in its dynamic balancing mode. In the particular machine illustrated, it is necessary to lower the cover assembly 84 over the tire assembly TA before the machine will operate. This is controlled by the tire cover switch SW-1 which is closed when the cover assembly 84 is lowered.

To also protect the operator while the machine is operating, a rasp cover assembly 85 is provided over the buffing head 66 which must be closed at least while the machine is in its force variation grinding mode. In the particular machine illustrated, a rasp switch SW-2 is provided which disables the machine until the cover assembly 85 is closed.

### CONTROL SYSTEM

The control system 19 includes a set of manually operated input switches SW-3 - SW-6. Switch SW-3 is the cycle start switch when force variation tire grinding is desired, while switch SW-4 initializes the machine if it is desirable to buff to a finer value than standard or to overbuff. Switch SW-5 enables the dynamic balancing mode to operate and switch SW-6 is the stop switch. The switches SW-3 - SW-6 are mounted on the control panel 88.

Also mounted on the control panel 88 are a set of potentiometers P-7 - P-9. These potentiometers are used to set up the machine for the balancing operation. Potentiometer P-7 is used to input rim width, potentiometer P-8 is used to input the distance between the rim edge and a known reference plane and potentiometer P-9 is used to input rim diameter. The output of the load transducer 60 also serves as another input to the control system 19 for use during the force variation tire grinding operation. The shaft encoder 76 as well as the two piezoelectric transducers 81_{F} and 81_{R} provide inputs to the control system 19 during the dynamic balancing operation. The enabling switches SW-1 for the tire cover and SW-2 for the rasp cover are also providing inputs to the control system 19.

The control system 19 includes a programmable controller 89 which controls the operation of the unit. The programmable controller 89 includes a central processing unit as is known in the art and is programmed with an externally produced program, illustrated as an insertable magnetic media 90. The programming of the controller 89 is within the capability of those skilled in the art and will not be described in detail herein. The controller 89 controls the operation of the rasp drive motor 70 through an appropriate motor controller 91.

The controller 89 also controls the operation of the spindle drive motor 48 through a variable speed controller 92 so that the motor 48 can be operated at the lower speed required for force variation grinding and at the higher speed required for dynamic balancing. While any of a number of different speed controllers may be used, the motor 48 illustrated is a d-c motor with the controller 92 being an AC converter which has an output frequency to the motor 48 which can be varied. Also, the controller 89 can be used to selectively position the motor 48 in different angular positions using the phase controller 94 as is known in the art. It will also be appreciated that the controller 89 can be used to operate the motor 48 as a brake by appropriately reversing the polarity on the motor 48. This allows the rotation of the tire and wheel assembly TA to be quickly stopped at the end of the balancing mode and also allows the motor 48 to be stopped at the various positions required when the motor is being used to rotationally position the tire and wheel assembly TA.

The controller 89 also controls the valve network 95 that controls the operation of the load cylinder 58 and buffing cylinder 75. The cylinders 58 and 75 are enabled by a run valve V-R whose solenoid is connected to the controller 89. The run valve V-R supplies air to a pneumatic hydraulic reservoir 96 so as to pressurize the hydraulic portion of the reservoir. The hydraulic portion of the reservoir is connected to the loading cylinder 58 through a locking valve V-L whose operating solenoid is connected to the controller 89. The air outlet from the run valve V-R is also connected to a buff valve V-B which can power the buff cylinder 75 while the run solenoid V-R is in its run position. The solenoid of the buff valve V-B is also controlled from the controller 89.

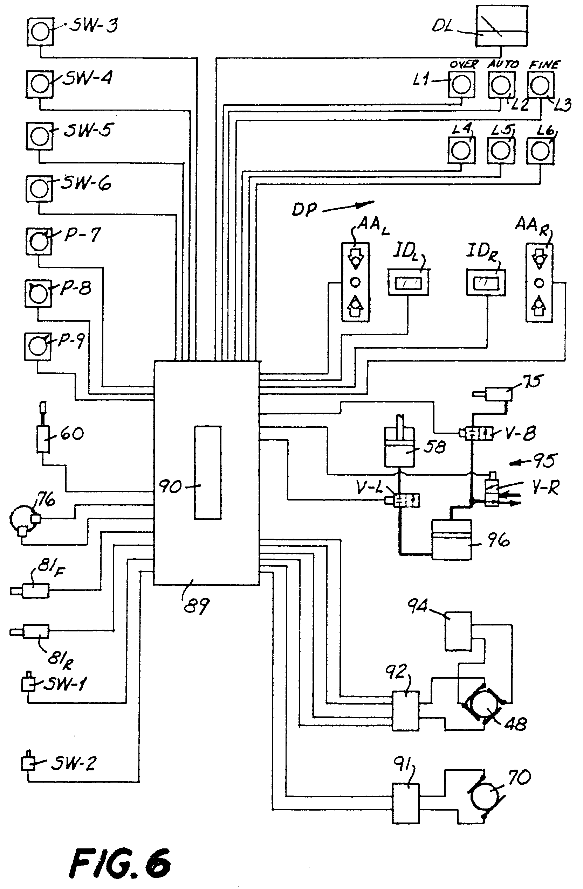

The controller 89 also powers the display DP. The display DP includes a first light array label led L1-L6 that indicates the particular state of the force variation grinding mode as labelled on Fig. 6. Also, a loaded radial runout gauge DL may be driven by the controller 89 to visually indicate the radial runout in the tire and wheel assembly TA.

The display DP also includes a pair of imbalance displays label led ID_{L} for the left side of the rim and ID_{R} for the right side of the rim. The displays ID may be any conventional displays used in the balancing art and are illustrated as liquid crystal displays. Appropriate arrow arrays AA_{L} and AA_{R} may likewise be powered from the controller 89 to indicate the location of the imbalance so that wheel weights can be applied to the rim after the tire is balanced.

### OPERATION

In operation, it will be seen that the operator mounts the tire and wheel assembly on the drive spindle 40 using the mounting assembly 14. This locks the tire and wheel assembly TA both axially along the spindle 40 and rotationally about the spindle 40 so that rotating the spindle 40 rotates the tire and wheel assembly TA therewith. The operator then inputs the rim width, measured distance between the inside wheel rim and a fixed reference point on the machine and inputs the rim diameter using the potentiometers P7-P9.

Typically, the machine is initialized and the start switch SW-3 as well as the balance switch SW-5 depressed while at least the tire cover assembly 84 is raised. If the fine buff or overbuff mode is desired, the switch SW-4 is also manipulated. After the tire cover assembly 84 is lowered to close switch SW-1, and provided that the rasp cover assembly 85 is also closed to close switch SW-2, the automatic operation of the machine proceeds. First, the controller 89 energizes the run valve V-R to pressurize the pneumatic hydraulic reservoir 96 and extend the load cylinder 58 to raise the drum 56 against the tire tread to load same. When the prescribed loading of the tire tread by the drum 56 is achieved, the locking valve V-L is operated by the controller 89 to lock the hydraulic fluid in the cylinder 58 and fix it in that position. The controller 89 then operates the motor 48 through the controller 92 so that the motor 48 rotates the tire and wheel assembly TA in the force variation grinding mode, usually about 12-15 RPM. The tire and wheel assembly TA is rotated one complete revolution while the output of the load transducer 60 produces inputs to the controller 89. After the initial rotation of the tire and wheel assembly TA, the controller 89 shifts the machine into the grinding mode if the loaded radial runout is within a correctable range. If the loaded radial runout is below the correctable range, the "good" lamp L6 is illuminated and the machine shifts into the balancing mode. If the loaded radial runout is within the correcting range, the controller 89 continues to rotate the tire and wheel assembly TA and to selectively energize the buff valve V-B at the appropriate locations to energize cylinder 75 and pull the buffing rasps 68 against the tire tread to buff away the portions of the tire tread exceeding the matching range. This process continues until the entire tire tread reads in the acceptable radial runout range. At this time, the controller 89 deactivates the run valve V-R to disable the circuit 95.

The controller 89 then shifts the machine into the dynamic balance mode by causing the controller 92 to shift the motor 48 into the higher RPM mode to spin the tire and wheel assembly TA at a sufficient RPM for balancing, usually 500-1500 RPM. At the same time, the shaft encoder 76 output is monitored as well as the two piezoelectric transducers 81_{F} and 81_{R} so that the amount of imbalance can be located at the two sides of the rim. The controller 89 calculates this imbalance using a typical imbalance calculation equation and operates the imbalance displays ID_{L} and ID_{R} to display the amount of weight to be added to the sides of the rim. The arrow arrays AA_{L} and AA_{R} are also illuminated to indicate the direction of the imbalance. The controller 89 applies a braking force to the motor 48 to stop the rotation of the tire and wheel assembly TA and then shifts the motor 48 through the position controller 94 until the rotational position of the wheel rim at which the imbalance is located is in a prescribed rotational position on the machine. The operator then applies the indicated wheel weight and energizes the machine either using a switch such as switch SW-5 or an additional switch and the controller 89 then moves the motor 48 until the position of the imbalance on the other side of the wheel rim is located at the first mentioned position. The operator then applies the weight to that side of the wheel rim and the tire and wheel assembly TA is ready to be removed from the machine.

## Claims

1. A method of correcting variations in radial forces exerted on a wheel and tire assembly (TA) while under radial loading through the tire tread and dynamic imbalance in a tire and wheel assembly CHARACTERISED BY the steps of:
(a) mounting the fire and wheel assembly (TA) on a support shaft (40,12) so that the tire and wheel assembly is rotatable about its rotational axis on the vehicle;
(b) connecting the support shaft (40,12) supporting the wheel and tire assembly (TA) to a drive motor (15) through drive belts (49) where the motor is oriented generally parallel to the support shaft and spaced from the support shaft along a first path extending radially of the support shaft so that the belt tension exerts a generally radially extending force on the support shaft along the first path;
(c) rotating the tire and wheel assembly (TA) about its rotational axis on said support shaft (40,12) with the motor at a rotational speed of about 12-15 rpm while exerting a radially directed load on the wheel and tire assembly with a drum (56) through the peripheral tread on the tire, which load corresponds to the load to which the tire and wheel assembly is subjected during use on the vehicle and is generally parallel to the first path;
(d) while the tire and wheel assembly is radially loaded, measuring the variations in force exerted by the tire tread on the loading drum (56);
(e) removing any portions of the tire tread required to reduce the force variations exerted by the tire tread on the loading drum (56) until the force variations are reduced to a prescribed range;
(f) after reducing the force variations exerted by the tire tread to said prescribed level, removing the radially directed load from the tire tread and disengaging the loading drum (56) from contact with the tire tread but leaving the tire and wheel assembly still rotatably mounted about the same rotational axis as when said tire and wheel assembly is rotating under load;
(g) rotating the unloaded tire and wheel assembly about its rotational axis on said support shaft (12,40) at a rotational speed of about 500-1500 rpm; and
(h) measuring the dynamic unbalance forces exerted on the support shaft along paths generally normal to the first path so that the radial forces exerted on the support shaft by the belts are not measured as dynamic unbalance forces and locating the dynamic imbalance in the tire and wheel assembly without removing the tire and wheel assembly from the support shaft.

2. The method of claim 1 wherein step (c) includes rotating the tire and wheel assembly at a first speed during steps (d) and (e) and wherein step (g) including rotating the tire and wheel assembly at a second speed during step (e).

3. The method of claim 1 further including the following step of attaching weights to the tire and wheel assembly to correct the measured and located dynamic imbalance.

4. A method according to any preceding claim comprising the steps of mounting a shaft adapted to be loaded with a first set of radially directed forces that do not rotate about the shaft axis and a second set of radially directed forces that rotate about the shaft axis operatively associating first transducer means with the shaft for detecting the force loading on the shaft in a direction such that the magnitude of the first set of forces is detected by said first transducer means; and operatively associating second transducer means with the shaft for detecting the force load on the shaft isolated from the first set of forces and such that the magnitude of the second set of forces is detected as the second set of forces rotates thereby.

## Patentansprüche

1. Verfahren zum Korrigieren von Schwankungen radialer Kräfte, die auf eine über die Reifenlauffläche unter radialer Belastung befindliche Rad- und Reifenbaugruppe (TA) ausgeübt werden, und einer dynamischen Unwucht in einer Reifen- und Radbaugruppe, **gekennzeichnet durch** die Verfahrensschritte:
a) Montieren der Rad- und Reifenbaugruppe (TA) an einer Tragwelle (40, 12) derart, daß die Reifen- und Radbaugruppe um ihre Drehachse an dem Fahrzeug drehbar ist;
b) Verbinden der Tragwelle (40, 12), die die Rad- und Reifenbaugruppe (TA) trägt, mittels Treibriemen (49) mit einem Antriebsmotor (15), wobei der Antriebsmotor insgesamt parallel zur Tragwelle orientiert ist und von der Tragwelle längs eines ersten Pfades entfernt ist, der sich radial zur Tragwelle erstreckt, so daß die Riemenspannung eine insgesamt radial gerichtete Kraft auf die Tragwelle längs des ersten Pfades ausübt;
c) Drehen der Rad- und Reifenbaugruppe (TA) um ihre Drehachse an der Tragwelle (40, 12) mittels des Motors mit einer Drehzahl von etwa 12 bis 15 U/min, während mit einer Trommel (56) über die Umfangslauffläche an dem Reifen eine radial gerichtete Last auf die Rad- und Reifenbaugruppe ausgeübt wird, welche Last der Last entspricht, der die Rad- und Reifenbaugruppe während der Benutzung am Fahrzeug ausgesetzt ist, und insgesamt parallel zu dem ersten Pfad ist;
d) während die Rad- und Reifenbaugruppe radial belastet ist, Messen der Schwankungen der von der Reifenlauffläche auf die Belastungstrommel (56) ausgeübten Kraft;
e) Entfernen von Bereichen der Reifenlauffläche, das erforderlich ist, um die von der Reifenlauffläche auf die Belastungstrommel (56) ausgeübten Kraftschwankungen zu vermindern bis die Kraftschwankungen auf einen vorgeschriebenen Bereich vermindert sind;
f) nach Vermindern der von der Reifenlauffläche ausgeübten Kraftschwankungen auf das vorgeschriebene Ausmaß Wegnehmen der radial gerichteten Belastung von der Reifenlauffläche und Lösen der Berührung der Belastungstrommel (56) mit der Reifenlauffläche, jedoch Belassen der Rad- und Reifenbaugruppe weiterhin um die gleiche Drehachse drehbar montiert, wie bei der Drehung der Rad- und Reifenbaugruppe unter Belastung;
g) Drehen der unbelasteten Rad- und Reifenbaugruppe um ihre Drehachse auf der Tragwelle (12, 40) mit einer Drehzahl von etwa 500 bis 1500 U/min und
h) Messen der dynamischen Unwuchtkräfte, die auf die Tragwelle längs insgesamt senkrecht zu dem ersten Rad gerichteten Pfaden ausgeübt werden, so daß die von den Riemen auf die Tragwelle ausgeübten radialen Kräfte nicht als dynamische Unwuchtkräfte gemessen werden, und Lokalisieren der dynamischen Unwucht in der Rad- und Reifenbaugruppe, ohne die Rad- und Reifenbaugruppe von der Tragwelle zu entfernen.

2. Verfahren nach Anspruch 1, wobei der Verfahrensschritt c) das Drehen der Reifen- und Radbaugruppe mit einer ersten Geschwindigkeit während der Verfahrensschritte d) und e) enthält und wobei der Verfahrensschritt g) das Drehen der Rad- und Reifenbaugruppe mit einer zweiten Geschwindigkeit während des Verfahrensschritts e) enthält.

3. Verfahren nach Anspruch 1, weiter enthaltend den folgenden Verfahrensschritt des Anbringens von Gewichten an der Reifen- und Radbaugruppe, um die gemessene und lokalisierte dynamische Unwucht zu korrigieren.

4. Verfahren nach einem der vorgehenden Ansprüche, enthaltend die Verfahrensschritte des Anbringens einer Welle, die mit einem ersten Satz von radial gerichteten Kräften, die nicht um die Wellenachse drehen, und mit einem zweiten Satz von radial gerichteten Kräften, die um die Wellenachse drehen, belastbar ist, betriebsmäßiges Zuordnen einer ersten Wandlereinrichtung zu der Welle zum Erfassen der Kraft, die auf der Welle lastet, in einer Richtung derart, daß die Größe des ersten Satzes der Kräfte von der ersten Wandlereinrichtung erfaßt wird; und betriebsmäßiges Zuordnen einer zweiten Wandlereinrichtung zu der Welle zum Erfassen der auf der Welle lastenden Kraft, getrennt von dem ersten Satz von Kräften und derart, daß die Größe des zweiten Satzes der Kräfte erfaßt wird, wenn der zweite Satz von Kräften dabei dreht.

## Revendications

1. Procédé de correction des variations des forces radiales exercées sur un ensemble roue et pneu (TA) tout en étant soumis à un chargement radial par l'intermédiaire de la bande de roulement du pneu, et de correction du défaut d'équilibrage dynamique dans un ensemble pneu et roue, CARACTERISE PAR les étapes suivantes :
(a) le montage de l'ensemble formant pneu et roue (TA) sur un arbre de support (40, 12) de sorte que l'ensemble pneu et roue puisse tourner autour de son axe de rotation sur le véhicule ;
(b) la connexion de l'arbre de support (40, 12), supportant l'ensemble roue et pneu (TA), à un moteur d'entraînement (15) par l'intermédiaire de courroies d'entraînement (49) où le moteur est orienté globalement en parallèle à l'arbre de support et est écarté de l'arbre de support le long d'un premier chemin s'étendant de façon radiale par rapport à l'arbre de support, de sorte que la tension de courroie exerce une force s'étendant globalement de façon radiale sur l'arbre de support le long du premier chemin ;
(c) la mise en rotation de l'ensemble pneu et roue (TA) autour de son axe de rotation sur ledit arbre de support (40, 12), le moteur étant à une vitesse de rotation d'environ 12 à 15 tours par minute, tout en exerçant une charge, orientée de façon radiale, sur l'ensemble roue et pneu avec un tambour (56) par l'intermédiaire de la bande de roulement en périphérie du pneu, laquelle charge correspond à la charge à laquelle l'ensemble pneu et roue serait soumise pendant l'utilisation sur le véhicule et est globalement paralléle au premier chemin ;
(d) tandis que l'ensemble pneu et roue est chargé de façon radiale, la mesure des variations de la force exercée par la bande de roulement du pneu sur le tambour de charge (56) ;
(e) l'enlèvement de toute partie de la bande de roulement du pneu nécessaire pour réduire les variations de la force exercée par la bande de roulement du pneu sur le tambour de charge (56) jusqu'à ce que les variations de force soient réduites à une plage prédéterminée ;
(f) après la réduction des variations de la force exercée par la bande de roulement du pneu jusqu'audit niveau prédéterminé, l'enlèvement de la force, orientée de façon radiale, de la bande de roulement du pneu et l'éloignement du tambour de charge (56) de la bande de roulement du pneu, dis en laissant l'ensemble pneu et roue toujours monté, de manière rotative, autour du même axe de rotation, comme lorsque ledit ensemble pneu et roue tourne sous la charge ;
(g) la mise en rotation de l'ensemble pneu et roue non chargé, autour de son axe de rotation, sur ledit arbre de support (12, 40) à une vitesse de rotation d'environ 500 à 1500 tours par minute ; et
(h) la mesure des forces de déséquilibre dynamique exercées sur l'arbre de support le long de chemins globalement perpendiculaires au premier chemin de sorte que les forces radiales exercées sur l'arbre de support par les courroies ne soient pas mesurées en tant que forces de déséquilibre dynamique, et la localisation du déséquilibre dynamique dans l'ensemble pneu et roue sans enlever l'ensemble pneu et roue de l'arbre de support.

2. Procédé selon la revendication 1, dans lequel l'étape (c) comprend la rotation de l'ensemble pneu et roue à une première vitesse pendant les étapes (d) et (e) et dans lequel l'étape (g) comprend la rotation de l'ensemble pneu et roue à une seconde vitesse pendant l'étape (e).

3. Procédé selon la revendication 1, comprenant, de plus, l'étape suivante de fixation de poids à l'ensemble pneu et roue pour corriger le déséquilibre dynamique mesuré et localisé.

4. Procédé selon l'une quelconque des revendications précédentes, comprenant les étapes de montage d'un arbre conçu pour être chargé avec un premier jeu de forces orientées de façon radiale qui ne tournent pas autour de l'axe de l'arbre et avec un second jeu de forces orientées de façon radiale qui tournent autour de l'axe de l'arbre, en associant à l'arbre, de façon opérationnelle, des premiers moyens formant transducteur pour détecter la charge de la force sur l'arbre dans un sens qui fait que l'amplitude du premier jeu de forces est détectée par lesdits premiers moyens formant transducteur ; et en associant à l'arbre, de façon opérationnelle, des seconds moyens formant transducteur pour détecter la charge de la force sur l'arbre, en étant isolé du premier jeu de forces, et de sorte que l'amplitude du second jeu de forces soit détectée lorsque le second jeu de forces tourne, de ce fait.
